# EUROPEAN PATENT APPLICATION

(11) **EP 4 769 500 A1**
(43) Date of publication of application: **01.07.2026**
(21) Application number: 25831193.5
(22) Date of filing: 18.06.2025
(51) Int. Cl.: H01M 4/04, B05C 19/00, B05C 19/06, B30B 3/04

(54) **HOPPER AND APPARATUS FOR MANUFACTURING ELECTRODE SHEET**

(30) Priority: 21.06.2024 KR 20240081361
(71) Applicant: LG Energy Solution, Ltd., Seoul 07335 (KR)
(72) Inventor: HAN, Seung Hee, Daejeon 34122 (KR); KWAK, Sang Min, Daejeon 34122 (KR); SHIN, Dong Oh, Daejeon 34122 (KR); JUNG, Jong Hyun, Daejeon 34122 (KR); YANG, Jeong Min, Daejeon 34122 (KR); OH, Sol Seon, Daejeon 34122 (KR); PARK, Yo Sub, Daejeon 34122 (KR); JANG, Sang Soo, Daejeon 34122 (KR); LEE, Nam Jeong, Daejeon 34122 (KR); PARK, Ji Hoon, Daejeon 34122 (KR)
(74) Representative: Goddar, Heinz J.
(86) International application number: PCT/KR2025/008422
(87) International publication number: WO 2025/263983

(57) **Abstract**

The present disclosure relates to a hopper including a main container including a main accommodation portion to provide a main space for holding a powder, a main outlet portion at a side of the main accommodation portion to discharge the powder in the main space toward press rollers, and a main inlet portion at an another side of the main accommodation portion to feed the powder from outside into the main space; and a sub-container including a sub-accommodation portion to provide a sub-space connected to the main space and a sub-outlet portion at a side of the sub-accommodation portion to discharge the powder in the sub-space toward the press rollers, wherein the main space has a different cross-sectional area from the sub-space in a plane perpendicular to a powder flow direction in which the powder flows from the main accommodation portion to the main outlet portion.

## Description

### TECHNICAL FIELD

### CROSS-REFERENCE TO RELATED APPLICATIONS

The present application claims priority to Korean Patent Application No. 10-2024-0081361 filed on June 21, 2024 in the Republic of Korea, the disclosure of which is incorporated herein by reference.

### TECHNICAL FIELD

The present disclosure relates to relates to a hopper and an electrode sheet manufacturing apparatus including the same, and more particularly, to a hopper for manufacturing an electrode sheet and an electrode sheet manufacturing apparatus.

### BACKGROUND ART

Secondary batteries have been used in small device applications including mobile devices or laptop computers, but recently, the research direction has expanded to the medium- and large-sized device applications, and secondary batteries are being used in a wide range of applications requiring high voltage and large capacity in relation to energy storage systems (ESSs) or electric vehicles (EVs).

Recently, dry electrodes are emerging among the types of electrodes used in secondary batteries. A dry electrode may be manufactured by compressing a powder including a carbon material, a binder and an electrode active material into a film shape and attaching it to a foil-type current collector.

The manufacture of the dry electrode is generally done by a manufacturing apparatus including a hopper accommodating the powder and a pair of press rollers to perform a forming process on the powder supplied from the hopper. The powder is fed into a space (i.e., a gap) between the pair of press rollers and compressed into a film shape having a predetermined width in the axial direction of the press rollers.

However, an electrode sheet manufactured by the commonly used manufacturing apparatus has non-uniform characteristics in the width direction. For example, the electrode sheet has uneven thickness or density in the width direction.

### SUMMARY

### TECHNICAL PROBLEM

The present disclosure is designed to solve the above-described problems, and the present disclosure is directed to provide a hopper and an electrode sheet manufacturing apparatus for manufacturing a high-quality electrode sheet having uniform characteristics in the width direction.

The problems of the present disclosure are not limited to the aforementioned problems, and these and other problems will be clearly understood by persons having ordinary skill in the technical field pertaining to the present disclosure from the following description.

### TECHNICAL SOLUTION

According to an aspect of the present disclosure, provided is a hopper including a main container including a main accommodation portion to provide a main space for holding a powder, a main outlet portion at a side of the main accommodation portion to discharge the powder in the main space toward press rollers, and a main inlet portion at an opposite side of the main accommodation portion to feed the powder from outside into the main space; and a sub-container including a sub-accommodation portion to provide a sub-space connected to the main space and a sub-outlet portion at a side of the sub-accommodation portion to discharge the powder in the sub-space toward the press rollers, wherein the main space has a different cross-sectional area from the sub-space in a plane perpendicular to a powder flow direction in which the powder flows from the main accommodation portion to the main outlet portion.

In this instance, the main space may have a larger width than the sub-space.

In this instance, the sub-container may include a pair of sub-containers, and the pair of sub-containers may be arranged with the main container positioned therebetween.

In this instance, a direction perpendicular to a width direction of the main space may be defined as a length direction, and the sub-container may be located at a side of the main container in the length direction.

In this instance, the main accommodation portion may include a pair of main sidewalls spaced apart from each other in the width direction with the main space positioned therebetween.

In this instance, the sub-space may decrease in width in a direction away from the main space.

In this instance, the sub-outlet portion may be connected to the main outlet portion.

In this instance, the sub-container may further include a sub-inlet portion at an opposite side of the sub-accommodation portion to feed the powder from the outside into the sub-space.

In this instance, the sub-inlet portion may be connected to the main inlet portion.

In this instance, the hopper may further include a connection container including a connection accommodation portion to provide a connection space connecting the main space to the sub-space, and the connection space may decrease in width from the main space to the sub-space.

In this instance, the sub-space may have an even width in a direction away from the main space.

In this instance, the main space may have an even width in a direction from the main space toward the sub-space.

In this instance, the connection container may further include a connection inlet portion at a side of the connection accommodation portion to discharge the powder in the connection space toward the press rollers.

In this instance, the connection container may further include a connection inlet portion at opposite side of the connection accommodation portion to feed the powder from the outside into the connection space.

In this instance, the sub-space may have an inclined inner wall toward the main space in the powder flow direction.

In this instance, the sub-accommodation portion may include a pair of sub-sidewalls spaced apart from each other with the main space positioned therebetween; and an inclined plate between the pair of sub-sidewalls to define the main space from the outside, and the inclined plate may be inclined toward the main space in the powder flow direction.

According to another aspect of the present disclosure, provided is an electrode sheet manufacturing apparatus including a pair of press rollers configured to compress a powder being fed; and a hopper to hold the powder to be fed between the pair of press rollers, wherein the hopper includes a main container including a main accommodation portion to provide a main space for holding the powder, a main outlet portion at a side of the main accommodation portion to discharge the powder in the main space toward the press rollers, and a main inlet portion at an opposite side of the main accommodation portion to feed the powder from outside into the main space; and a sub-container including a sub-accommodation portion to provide a sub-space connected to the main space and a sub-inlet portion at a side of the sub-accommodation portion to discharge the powder in the sub-space toward the press rollers, wherein the main space has a different cross-sectional area from the sub-space in a plane perpendicular to a powder flow direction in which the powder flows from the main accommodation portion to the main outlet portion.

### ADVANTAGEOUS EFFECTS

According to an aspect of the present disclosure, as the main space and the sub-space of the hopper used to hold and feed powder to the press rollers have different cross-sectional areas, it may be possible to control the amount of powder fed along the length direction in the gap between the press rollers, thereby manufacturing high-quality electrode sheets having uniform characteristics in the width direction.

The effects of the present disclosure are not limited to the aforementioned effects, and these and other effects will be clearly understood by persons having ordinary skill in the technical field pertaining to the present disclosure from this specification and the accompanying drawings.

### BRIEF DESCRIPTION OF THE DRAWINGS

FIG. 1 is a perspective view of an electrode sheet manufacturing apparatus according to a first embodiment of the present disclosure when viewed from above. In this instance, press rollers are indicated by the dotted line.
FIG. 2 is a perspective view of a hopper of the electrode sheet manufacturing apparatus according to the first embodiment of the present disclosure when viewed from below.
FIG. 3 is a plane view of the hopper shown in FIG. 2.
FIG. 4 is a perspective view of a hopper of an electrode sheet manufacturing apparatus according to a second embodiment of the present disclosure when viewed from above.
FIG. 5 is a perspective view of the hopper shown in FIG. 4 when viewed from below.
FIG. 6 is a plane view of the hopper shown in FIG. 4.
FIG. 7 is a perspective view of a hopper of an electrode sheet manufacturing apparatus according to a third embodiment of the present disclosure when viewed from above.
FIG. 8 is a vertical cross-sectional view of the electrode sheet manufacturing apparatus according to the third embodiment of the present disclosure. In this instance, a press roller is indicated by the dotted line.
FIG. 9 is a plane view of an inclined plate shown in FIG. 7.

### DETAILED DESCRIPTION

Hereinafter, the exemplary embodiments of the present disclosure will be described in sufficient detail to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the specification.

Additionally, it should be understood that the terms or words used in this specification and the appended claims should not be construed as limited to general and dictionary meanings, and rather, should be interpreted based on the meanings and concepts corresponding to the technical aspects of the present disclosure on the basis of the principle that the inventor is allowed to define the terms appropriately for the best explanation.

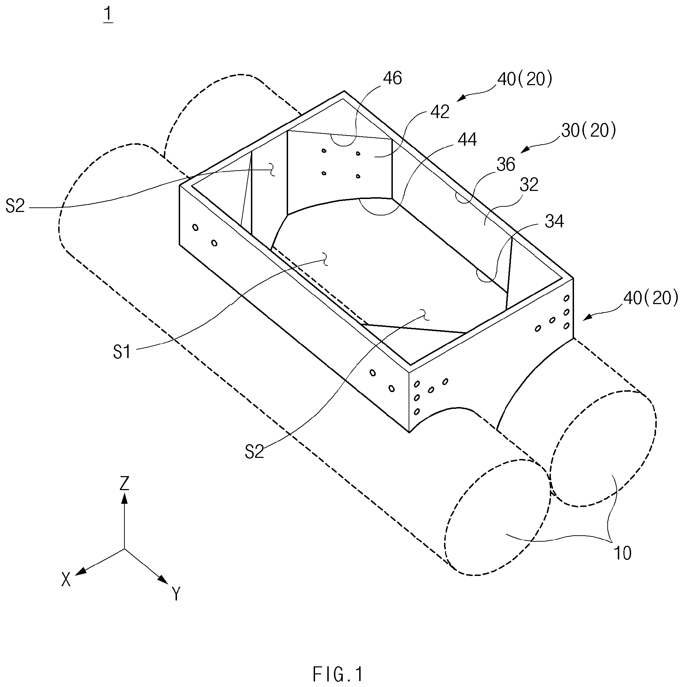

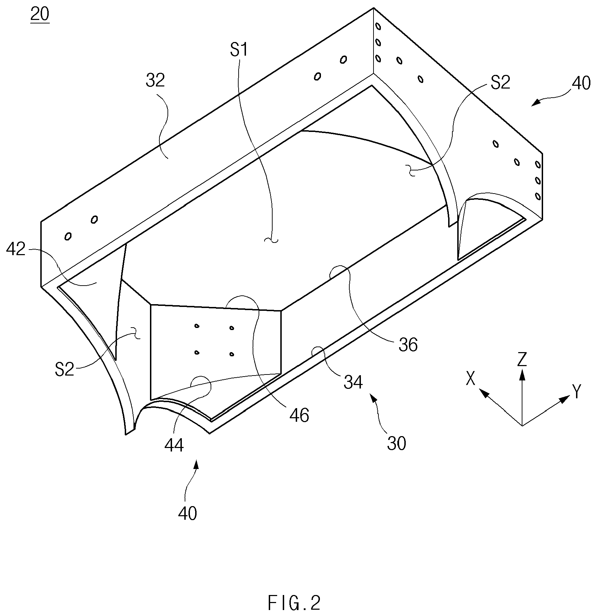

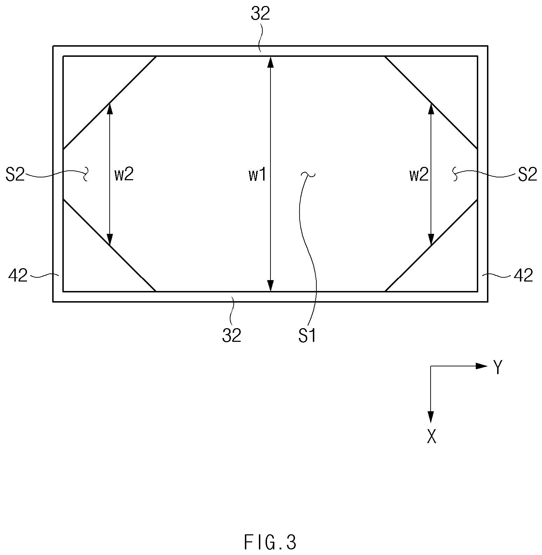

FIG. 1 is a perspective view of an electrode sheet manufacturing apparatus according to a first embodiment of the present disclosure when viewed from above. In this instance, press rollers are indicated by the dotted line. FIG. 2 is a perspective view of a hopper of the electrode sheet manufacturing apparatus according to the first embodiment of the present disclosure when viewed from below. FIG. 3 is a plane view of the hopper shown in FIG. 2.

FIGS. 1 to 3 show the electrode sheet manufacturing apparatus (hereinafter referred to as the manufacturing apparatus) 1 according to the first embodiment of the present disclosure. The manufacturing apparatus 1 according to the first embodiment of the present disclosure may be used to manufacture a film-shaped electrode sheet by compressing a powder.

In this instance, the powder may be a slurry containing an electrode active material, a binder and a conductive material mixed in powder state, and the electrode sheet may be an electrode sheet for the manufacture of a dry electrode, but the type of the powder and/or the electrode sheet is not limited thereto.

Referring to FIG. 1, the manufacturing apparatus 1 according to the first embodiment of the present disclosure may include a press roller 10. The press roller 10 may be configured to compress the powder into a film shape by applying pressure to the powder.

The press roller 10 may be extended in a direction. For example, the press roller 10 may be extended along the left-right direction (Y-axis direction) as shown. Parts of the press roller 10 may have a stepped or curved shape.

In this embodiment, the press roller 10 may include a pair of press rollers. Additionally, the pair of press rollers 10 may be arranged parallel to each other. A predetermined space may be formed between the pair of press rollers 10. Hereinafter, the space is referred to as a roller gap.

In this embodiment, the roller gap may be provided as a narrow spacing (or a slitshaped space) between the pair of press rollers 10. The roller gap may be extended in a direction parallel to the press rollers 10.

When the powder is supplied to one side of the roller gap and the pair of press rollers 10 rotate in opposite directions, the powder in the roller gap may be compressed into a film shape and discharged to the other side.

Hereinafter, this embodiment is described on the premise that the powder is supplied to the upper side of the roller gap (the positive direction of the Z axis) and then compressed and discharged to the lower side of the roller gap (the positive direction of the Z axis). The flow direction of the powder is referred to as powder flow direction.

Meanwhile, this embodiment is described on the premise that the powder flow direction is a direction from top to bottom. However, the powder flow direction may be appropriately changed depending on the placement of the press rollers 10 and the shape and placement of the hopper 20 as described below.

Referring to FIGS. 1 to 3, the manufacturing apparatus 1 according to the first embodiment of the present disclosure may include the hopper 20. The hopper 20 may be configured to hold the powder inside and supply the powder to the gap of the press rollers 10 described above. To this end, the hopper 20 may have a shape of a container having a predetermined space inside and an open side toward the press rollers 10.

In this embodiment, the hopper 20 may be positioned on the press rollers 10. The hopper 20 may hold the powder and discharge the powder downward to supply it to the gap of the press rollers 10.

In this embodiment, the hopper 20 may include a main container 30. The main container 30 may be a container for supplying the powder to a central portion of the roller gap. The powder supplied from the main container 30 to the press rollers 10 may form a central portion of the electrode sheet. Here, the central portion may refer to a portion located relatively at the center on the basis of the left-right direction (Y-axis direction) which is the length direction of the roller gap.

In this embodiment, the main container 30 may include a main accommodation portion 32 having a main space S1 inside. The main space S1 may be a predetermined space located on the central portion of the roller gap. The main space S1 may accommodate the powder.

To this end, the main accommodation portion 32 may have a pair of main sidewalls to define the main space S1 from the outside. The pair of main sidewalls may be arranged spaced a predetermined distance apart from each other in the width direction (X-axis direction) of the main space S1 with the main space S1 positioned therebetween. The pair of main sidewalls may be extended parallel to the length direction of the roller gap.

In this instance, in this embodiment, the main space S1 may have an even width W1 in the length direction (Y-axis direction) of the roller gap. Here, the width direction (X-axis direction) of the space may be defined as a direction perpendicular to the powder flow direction (Z-axis direction) and the length direction (Y-axis direction) of the roller gap. To this end, the pair of main sidewalls may be arranged parallel to each other. The width W1 of the main space S1 may be appropriately changed as needed.

Meanwhile, the main container 30 of the manufacturing apparatus 1 according to the first embodiment of the present disclosure may include a main outlet portion 34. The main outlet portion 34 may be disposed at the bottom of the main accommodation portion 32. The main outlet portion 34 may be open downward to the gap of the press rollers 10. Additionally, the main outlet portion 34 may be connected to the main space S1.

Accordingly, the powder held in the main space S1 may be supplied to the central portion of the roller gap through the main outlet portion 34. In this embodiment, the main outlet portion 34 may form an open lower surface of the main space S1. However, the shape or location of the main outlet portion 34 is not limited to a particular one and the main outlet portion 34 may have any shape or location for supplying the powder from the main space S1 to the press rollers 10.

The main container 30 of the manufacturing apparatus 1 according to the first embodiment of the present disclosure may include a main inlet portion 36. The main inlet portion 36 may be disposed at the top of the main accommodation portion 32. The main inlet portion 36 may be open to the outside of the main accommodation portion 32. As shown, the main inlet portion 36 may be open upward (the positive direction of the Z axis). The main inlet portion 36 may be connected to the main space S1.

Accordingly, the powder may be supplied from the outside and held in the main space S1. In this embodiment, the main inlet portion 36 may form an open upper surface of the main space S1. However, the shape or location of the main inlet portion 36 is not limited to a particular one and the main inlet portion 36 may have any shape or location for supplying the external powder to the main space S1.

Meanwhile, the hopper 20 of the manufacturing apparatus 1 according to the first embodiment of the present disclosure may include a sub-container 40. The sub-container 40 may be disposed at one side of the main container 30 on the basis of the length direction (Y-axis direction) of the roller gap.

The sub-container 40 may be configured to supply the powder to a side portion of the roller gap. The powder supplied from the sub-container 40 to the roller gap may form a side portion (edge portion) of the electrode sheet. Here, the side portion may refer to a portion located at one side of the central portion on the basis of the length direction (Y-axis direction) of the roller gap.

The sub-container 40 may include a sub-accommodation portion 42. The sub-accommodation portion 42 may have a sub-space S2 inside. The sub-space S2 may be a predetermined space located on the side portion of the roller gap. The sub-space S2 may be connected to the main space S1. The sub-space S2 may accommodate the powder.

In this instance, on the basis of a plane (a plane including the X axis and the Y axis) perpendicular to the top-bottom direction (Z-axis direction) which is the powder flow direction, the main space S1 and the sub-space S2 may have different cross-sectional areas. In this embodiment, because the plane is the same as a horizontal plane, hereinafter, the plane refers to the horizontal plane. However, in other embodiments or variations, the plane may be defined differently depending on the powder flow direction.

In this embodiment, the sub-space S2 may have a smaller cross-sectional area than the main space S1. More specifically, the sub-space S2 may have a narrower width W2 in a direction away from the main space S1. In this instance, the direction away from the main space S1 may be parallel to the length direction (Y-axis direction) of the roller gap.

Describing more specifically, the sub-space S2 may have a trapezoidal shape having a longer side and a shorter side. In this case, the longer side may be a side connected to the main space S1, and the shorter side may be a side located away from the main space S1.

This may be configured to control the amount of powder fed into the roller gap to ensure that the electrode sheet formed by compressing the powder using the press rollers 10 has uniform characteristics in the width direction. In this instance, the width direction of the electrode sheet may be the same as the length direction (Y-axis direction) of the roller gap.

Describing more specifically, the side portion of the roller gap may be narrower than the central portion, or may be subjected to larger forces by the press rollers 10. This may be because the operation of the manufacturing apparatus 1 involves deformation to the press rollers 10 to some extent. The deformation may include bending or wear due to the force in process.

Due to this difference, the central portion and the side portion of the electrode sheet may have different properties. For example, the central portion of the electrode sheet may have much larger thickness or much lower density than the side portion. The difference in properties may reduce the quality of the electrode sheet.

In this embodiment, as the sub-space S2 for supplying the powder to the side portion of the roller gap has a smaller area than the main space S1 for supplying the powder to the central portion of the roller gap, the amount of powder supplied to the side portion of the roller gap may be smaller than the amount of powder supplied to the central portion of the roller gap. Through this, the manufacturing apparatus 1 according to this embodiment may manufacture the high-quality electrode sheet having more uniform properties in the width direction.

To form the sub-space S2 as described above, the sub-accommodation portion 42 according to this embodiment may include a pair of sub-sidewalls spaced a predetermined distance apart from each other in the width W2 direction of the sub-space S2 with the sub-space S2 positioned therebetween.

The sub-space S2 may be defined from the outside by the pair of sub-sidewalls. In this instance, the pair of sub-sidewalls may be connected to the pair of main sidewalls, respectively. The pair of sub-sidewalls may be parallel to each other.

Additionally, the sub-accommodation portion 42 may further include a shape control member for forming the shape of the sub-space S2. In this embodiment, the shape control member is provided as a triangular prism-shaped member having a larger thickness in the outward direction of the main space S1. The shape control member may include a pair of shape control members, and each may be positioned on the inner surface of each of the pair of sub-sidewalls.

Meanwhile, this embodiment describes that the shape of the sub-space S2 is controlled by the sub-sidewalls and the shape control members. However, the shape of the sub-space S2 may be controlled by placing the pair of sub-sidewalls at an angle without including the shape control member.

Referring back to FIGS. 1 to 3, the sub-container 40 of the manufacturing apparatus 1 according to the first embodiment of the present disclosure may include a sub-outlet portion 44. The sub-outlet portion 44 may be disposed at the bottom of the sub-accommodation portion 42. The sub-outlet portion 44 may be open downward to the gap of the press rollers 10. The sub-outlet portion 44 may be connected to the sub-space S2. The sub-outlet portion 44 may also be connected to the main outlet portion 34.

Accordingly, the powder held in the sub-space S2 may be supplied to the side portion of the roller gap through the sub-outlet portion 44. In this embodiment, the sub-outlet portion 44 may form an open lower surface of the sub-space S2. However, the shape or location of the sub-outlet portion 44 is not limited to a particular one and the sub-outlet portion 44 may have any shape or location for supplying the powder from the sub-space S2 to the press rollers 10.

The sub-container 40 of the manufacturing apparatus 1 according to the first embodiment of the present disclosure may include a sub-inlet portion 46. The sub-inlet portion 46 may be positioned at the top of the sub-accommodation portion 42. The sub-inlet portion 46 may be open to the outside of the sub-accommodation portion 42. As shown, the sub-inlet portion 46 may be open upward (the positive direction of the Z axis). The sub-inlet portion 46 may be connected to the sub-space S2. The sub-inlet portion 46 may also be connected to the main inlet section 36.

Accordingly, the powder may be supplied from the outside and held in the sub-space S2. In this embodiment, the sub-inlet portion 46 may form an open upper surface of the sub-space S2. However, the shape or location of the sub-inlet portion 46 is not limited to a particular one and the sub-inlet portion 46 may have any shape or location for supplying the external powder to the sub-space S2.

Meanwhile, referring back to FIG. 3, the sub-container 40 of the hopper 20 of the manufacturing apparatus according to the first embodiment of the present disclosure may include a pair of sub-containers. Additionally, the pair of sub-containers 40 may be arranged with the main container 30 positioned therebetween. In this instance, the pair of sub-containers 40 may be arranged in the length direction (Y-axis direction) of the roller gap.

Accordingly, the amount of powder fed into the two side portions of the roller gap may be adjusted. Accordingly, the electrode sheet formed by compressing the powder using the manufacturing apparatus according to this embodiment may have uniform characteristics over the side portion (or two edge portions) and the central portion.

Meanwhile, this embodiment describes that the sub-space S2 has the trapezoidal cross section on the basis of the horizontal plane. However, the shape of the sub-space S2 is not limited to a particular one and the sub-space S2 may have any shape for feeding a smaller amount of powder into the side portion of the roller gap than the central portion. For example, the sub-space S2 may have a semicircular or semi-elliptical shape.

Additionally, this embodiment describes that the main space S1 has a larger cross-sectional area than the sub-space S2 on the basis of the horizontal plane. However, the sub-space S2 may have a larger cross-sectional area than the main space S1 as needed.

Hereinafter, the manufacturing apparatus according to another embodiment of the present disclosure will be described with reference to another drawing.

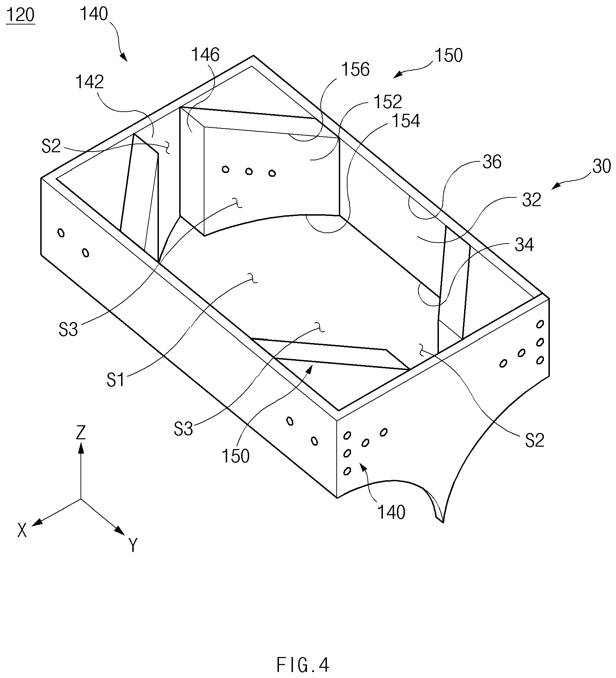

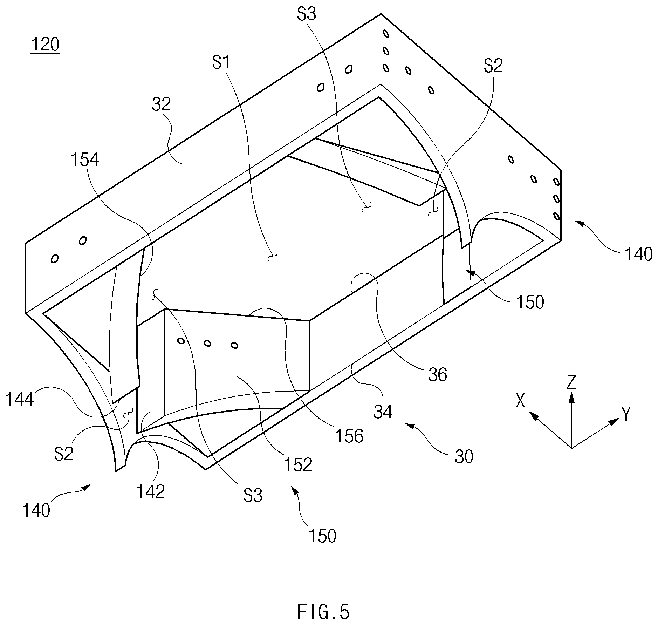

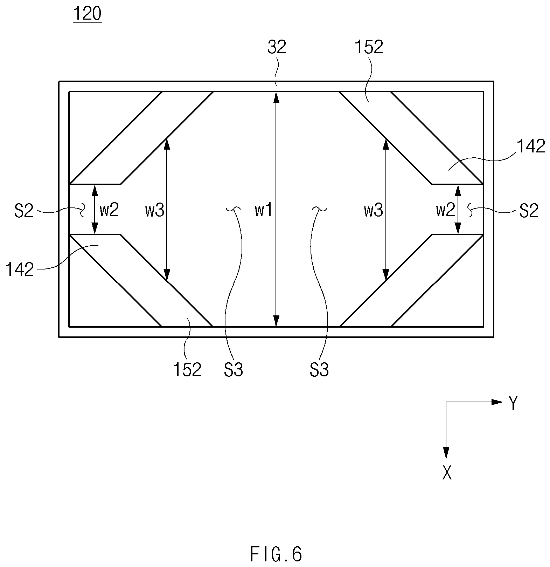

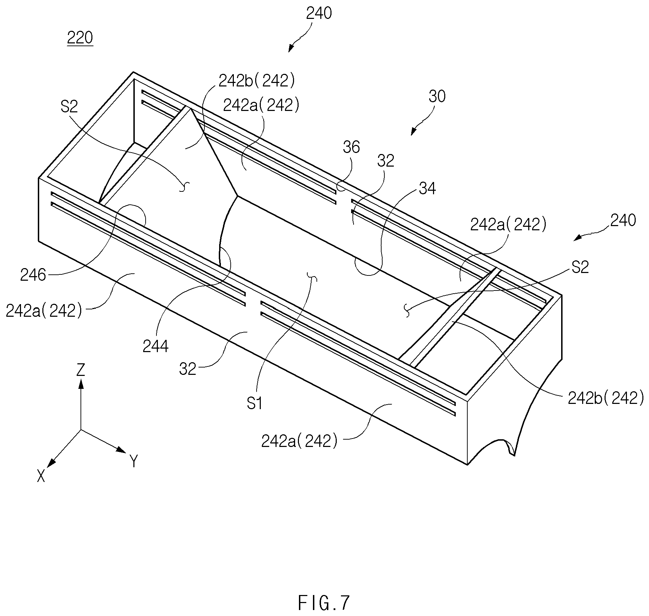

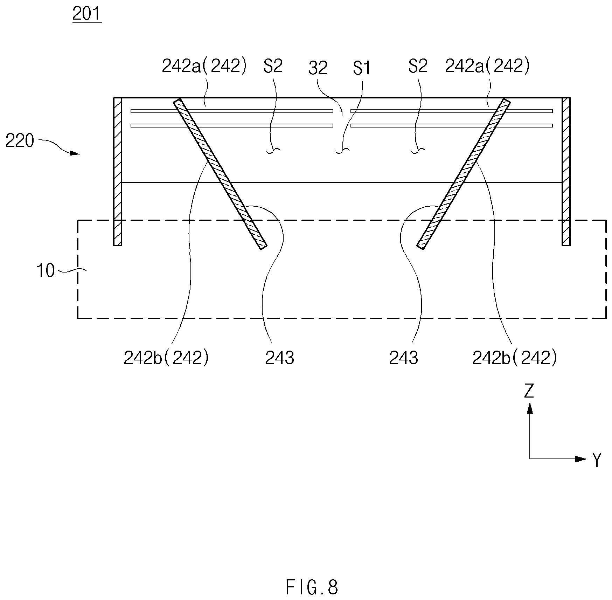

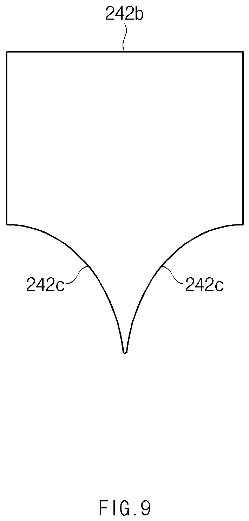

FIG. 4 is a perspective view of the hopper of the electrode sheet manufacturing apparatus according to a second embodiment of the present disclosure when viewed from above. FIG. 5 is a perspective view of the hopper shown in FIG. 4 when viewed from below. FIG. 6 is a plane view of the hopper shown in FIG. 4. FIG. 7 is a perspective view of the hopper of the electrode sheet manufacturing apparatus according to a third embodiment of the present disclosure when viewed from above. FIG. 8 is a vertical cross-sectional view of the electrode sheet manufacturing apparatus according to the third embodiment of the present disclosure. In this instance, the press roller is indicated by the dotted line. FIG. 9 is a plane view of an inclined plate shown in FIG. 7.

FIGS. 4 to 6 show the hopper 120 of the manufacturing apparatus according to the second embodiment of the present disclosure. Referring to FIGS. 4 to 6, the hopper 120 according to the second embodiment of the present disclosure may include the main container 30. In this instance, the main container 30 of the hopper 120 according to this embodiment may have the same configuration as the main container of the hopper according to the first embodiment described above.

Meanwhile, in this embodiment, the hopper 120 may include a sub-container 140. The sub-container 140 may be disposed at one side of the main container 30 on the basis of the length direction (Y-axis direction) of the roller gap. The sub-container 140 may be configured to supply powder to the side portion of the roller gap. The powder may form the side portion (edge portion) of the electrode sheet.

In this instance, in this embodiment, the sub-container 140 may include a sub-accommodation portion 142. The sub-accommodation portion 142 may have a sub-space S2 inside. The sub-space S2 may be a predetermined space located on the side portion of the roller gap. The sub-space S2 may be connected to the main space S1 through a connection space S3 as described below. The sub-space S2 may accommodate the powder.

In this embodiment, the sub-space S2 may have an even width on the basis of the length direction of the roller gap. In this instance, the sub-space S2 may have a narrower cross-sectional area than the main space S1 on the basis of the horizontal plane. To this end, the width W2 of the sub-space S2 may be smaller than the width W1 of the main space S1. This may be configured to supply a smaller amount of powder to the side portion of the roller gap than the central portion to ensure that the electrode sheet has more uniform characteristics in the width direction.

To form the sub-space S2 as described above, the sub-accommodation portion 142 may include a pair of sub-sidewalls spaced a predetermined distance apart from each other in the width W2 direction of the sub-space S2 with the sub-space S2 positioned therebetween. In this instance, the sub-sidewalls may be connected to the main sidewalls of the main container 30 through connection sidewalls of a connection container 150 as described below. The pair of sub-sidewalls may be parallel to each other.

Additionally, the sub-accommodation portion 142 may further include a sub-space-side shape control member for forming the shape of the sub-space S2. In this embodiment, the sub-space-side shape control member may be provided as a block-shaped member having an even width (or thickness) in the length direction (Y-axis direction) of the roller gap. The sub-space-side shape control member may include a pair of sub-space-side shape control members, and each may be positioned on the inner surface of each of the pair of sub-sidewalls.

Referring back to FIGS. 4 to 6, the sub-container 140 of the manufacturing apparatus according to the second embodiment of the present disclosure may include a sub-outlet portion 144. The sub-outlet portion 144 may be disposed at the bottom of the sub-accommodation portion 142. The sub-outlet portion 144 may be open downward to the gap of the press rollers. The sub-outlet portion 144 may be connected to the sub-space S2. The sub-outlet portion 144 may also be connected to the main outlet portion 34 through a connection outlet portion 154 as described below.

Accordingly, the powder held in the sub-space S2 may be supplied to the side portion of the roller gap through the sub-outlet portion 144. In this embodiment, the sub-outlet portion 144 may form an open lower surface of the sub-space S2. However, the shape or location of the sub-outlet portion 144 is not limited to a particular one and the sub-outlet portion 144 may have any shape or location for supplying the powder from the sub-space S2 to the press rollers.

The sub-container 140 of the manufacturing apparatus according to the second embodiment of the present disclosure may include a sub-inlet portion 146. The sub-inlet portion 146 may be disposed at the top of the sub-accommodation portion 142. The sub-inlet portion 146 may be open toward the outside of the sub-accommodation portion 142. As shown, the sub-inlet portion 146 may be open upward (the positive direction of the Z axis). The sub-inlet portion 146 may be connected to the sub-space S2. The sub-inlet portion 146 may also be connected to the main inlet section 36 through a connection inlet portion 156 as described below.

Accordingly, the powder may be supplied from the outside and held in the sub-space S2. In this embodiment, the sub-inlet portion 146 may form an open upper surface of the sub-space S2. However, the shape or location of the sub-inlet portion 146 is not limited to a particular one and the sub-inlet portion 146 may have any shape or location for supplying the external powder to the sub-space S2.

Referring to FIGS. 4 to 6, the hopper 120 of the manufacturing apparatus according to the second embodiment of the present disclosure may include the connection container 150. The connection container 150 may be disposed between the main container 30 and the sub-container 140 to connect the main space S1 to the sub-space S2.

In this embodiment, the connection container 150 may include a connection accommodation portion 152. The connection accommodation portion 152 may be disposed between the main accommodation portion 32 and the sub-accommodation portion 142. The connection accommodation portion 152 may have a connection space S3 inside. In this instance, the connection space S3 may connect the main space S1 to the sub-space S2. Accordingly, the main space S1 and the sub-space S2 may be connected through the connection space S3.

In this instance, the connection space S3 may have a shape with a smaller width W3 from the main space S1 to the sub-space S2. More specifically, the connection space S3 may have a trapezoidal shape having a longer side and a shorter side on the basis of the horizontal plane. In this instance, the longer side may have a length that is equal to the width W1 of the main space S1, and the shorter side may have a length that is equal to the width W2 of the sub-space S2. Through this, the amount of powder flowing from the main space S1 to the sub-space S2 may be controlled.

To form the connection space S3 as described above, the connection accommodation portion 152 according to this embodiment may include a pair of connection sidewalls spaced a predetermined distance apart from each other in the width W3 direction of the connection space S3 with the connection space S3 positioned therebetween.

The connection space S3 may be defined from the outside by the pair of connection sidewalls. In this instance, the connection sidewalls may be each connected to the main sidewalls and the sub-sidewalls. Accordingly, the main sidewalls and the sub-sidewalls may be connected through the connection sidewalls. The pair of connection sidewalls may be parallel to each other.

In addition, the connection accommodation portion 152 may further include a connection space-side shape control member for forming the shape of the connection space S3. In this embodiment, the connection space-side shape control member is provided as a triangular prism-shaped member having a larger thickness from the main space S1 to the sub-space S2.

The connection space-side shape control member may include a pair of connection space-side shape control members and each may be disposed on the inner surface of each of the pair of connection sidewalls. In this instance, the connection space-side shape control members may be connected to the sub-space-side shape control members, or they may be combined into one.

Meanwhile, referring back to FIGS. 4 to 6, the connection container 150 of the manufacturing apparatus according to the second embodiment of the present disclosure may include the connection outlet portion 154. The connection outlet portion 154 may be disposed at the bottom of the connection container 152. The connection outlet portion 154 may be open downward to the gap of the press rollers. The connection outlet portion 154 may be connected to the connection space S3. The connection outlet portion 154 may also be connected to the main outlet portion 34 or the sub-outlet portion 144.

Accordingly, the powder held in the connection space S3 may be supplied to the connection portion of the roller gap through the connection outlet portion 154. This may be configured to gradually reduce the amount of powder fed as it goes from the central portion to the side portion. Through this, the electrode sheet having more uniform characteristics in the width direction may be manufactured.

In this embodiment, the connection outlet portion 154 may form an open lower surface of the connection space S3. However, the shape or location of the connection outlet portion 154 is not limited to a particular one and the connection outlet portion 154 may have any shape or location for supplying the powder from the connection space S3 to the press rollers.

Meanwhile, the connection container 150 of the manufacturing apparatus according to the second embodiment of the present disclosure may include a connection inlet portion 156. The connection inlet portion 156 may be disposed at the top of the connection accommodation portion 152. The connection inlet portion 156 may be open toward the outside of the connection accommodation portion 152. As shown, the connection inlet portion 156 may be open upward (the positive direction of the Z axis). The connection inlet portion 156 may be connected to the connection space S3. The connection inlet portion 156 may also be connected to the main inlet portion 36 or the sub-inlet portion 146.

Accordingly, the powder may be supplied from the outside and held in the connection space S3. In this embodiment, the connection inlet portion 156 may form an open upper surface of the connection space S3. However, the shape or location of the connection inlet portion 156 is not limited to a particular one and the connection inlet portion 156 may have any shape or location for supplying the external powder to the connection space S3.

Meanwhile, this embodiment describes that the shape of the sub-space S2 and the connection space S3 is controlled by the sub-space-side shape control members and the connection space-side shape control members. However, the shape of the sub-space S2 and the connection space S3 may be controlled by positioning the pair of sub-sidewalls in parallel, spaced apart from each other by the width W2 of the sub-space S2, and positioning the pair of connection sidewalls at an angle, without including the shape control member.

Hereinafter, the hopper of the electrode sheet manufacturing apparatus according to a third embodiment of the present disclosure will be described.

FIGS. 7 to 9 show the hopper 220 of the manufacturing apparatus according to the third embodiment of the present disclosure. Referring to FIGS. 7 to 9, the hopper 220 of the manufacturing apparatus according to the third embodiment of the present disclosure may include the main container 30. In this instance, the main container 30 according to this embodiment may have the same configuration as the main container described in the manufacturing apparatus according to the first embodiment.

The hopper 220 of the manufacturing apparatus according to the third embodiment of the present disclosure may include a sub-container 240. The sub-container 240 may be configured to supply powder to the side portion of the roller gap. The powder may form the side portion (edge portion) of the electrode sheet.

In this embodiment, the sub-container 240 may include a sub-accommodation portion 242. The sub-accommodation portion 242 may have a sub-space S2 inside. The sub-space S2 may be a predetermined space located on the side portion of the roller gap. The sub-space S2 may be connected to the main space S1. The sub-space S2 may accommodate the powder.

In this instance, the sub-space S2 may have a smaller cross-sectional area than the main space S1 on the basis of the horizontal plane. More specifically, the sub-space S2 may have a shape with a smaller horizontal cross-sectional area in the powder flow direction (the negative direction of the Z-axis). To this end, an inner surface 243 of the sub-space S2 facing the main space S1 may be inclined such that it gets closer to the main space S1 in the powder flow direction.

To provide the above-described shape of the sub-space S2, the sub-accommodation portion 242 may include a pair of sub-sidewalls 242b arranged with the sub-space S2 positioned therebetween. The pair of sub-sidewalls 242b may be parallel to each other. The sub-sidewalls 242b may be respectively connected to the main sidewalls of the main container 30.

Additionally, the sub-accommodation portion 242 may include the inclined plate 242b. The inclined plate 242b may be disposed between the pair of sub-sidewalls 242b. Accordingly, the inclined plate 242b may define the sub-space S2 from the outside.

In this instance, the inclined plate 242b may be disposed such that one side faces the main space S1. Additionally, the inclined plate 242b may be inclined toward the main space S1 as it goes downward (the negative direction of the Z axis) in the powder flow direction. Accordingly, the side of the inclined plate 242b may form the inner surface 243 of the sub-space S2.

As described above, in this embodiment, as the horizontal cross section of the sub-space S2 decreases in the powder flow direction, a smaller amount of powder may be supplied to the side portion of the roller gap than the central portion. Through this, more uniform characteristics in the width direction of the electrode sheet may be achieved.

In this instance, in this embodiment, the lower edge portion of the inclined plate 242b may include an edge portion 242c that curves concavely inwards. The edge portion 242c may have, for example, the same shape as a portion of an ellipse.

The edge portion 242c may have a shape to conform to the outer circumference of the press roller 10. Through this, powder leakage between the edge portion 242c and the outer circumference of the press roller 10 may be minimized.

In this instance, the edge portion 242c may include a pair of edge portions. Additionally, the pair of edge portions 242c may be symmetrical with respect to the center portion of the inclined plate 242b. Accordingly, the pair of edge portions 242c may have the shape to conform to the outer circumference of the pair of press rollers 10, respectively.

Meanwhile, referring back to FIG. 7, the sub-container 240 of the hopper 220 of the manufacturing apparatus according to the third embodiment of the present disclosure may include a pair of sub-containers. Additionally, the pair of sub-containers 240 may be arranged with the main container 30 positioned therebetween. In this instance, the pair of sub-containers 240 may be arranged in the length direction (Y-axis direction) of the roller gap.

Accordingly, the amount of powder fed into the two side portions of the roller gap may be controlled. Accordingly, the electrode sheet formed by compressing the powder using the manufacturing apparatus according to this embodiment may have uniform characteristics over the two side portions (or two edge portions) and the central portion.

Although the present disclosure has been hereinabove described by certain embodiments and drawings, the present disclosure is not limited thereto, and it is obvious to persons having ordinary skill in the technical field pertaining to the present disclosure that modifications and changes may be made thereto within the technical aspects of the present disclosure and the scope of the appended claims and their equivalents.

### [List of Reference Numerals]

1: Electrode sheet manufacturing apparatus
10: Press roller
20, 120, 220: Hopper
30: Main container
40, 140, 240: Sub-container
150: Connection container
S1: Main space
S2: Sub-space
S3: Connection space

## Claims

1. A hopper comprising:
a main container including a main accommodation portion to provide a main space for holding a powder, a main outlet portion at a side of the main accommodation portion to discharge the powder in the main space toward press rollers, and a main inlet portion at an opposite side of the main accommodation portion to feed the powder from outside into the main space; and
a sub-container including a sub-accommodation portion to provide a sub-space connected to the main space and a sub-outlet portion at a side of the sub-accommodation portion to discharge the powder in the sub-space toward the press rollers,
wherein the main space has a different cross-sectional area from the sub-space in a plane perpendicular to a powder flow direction in which the powder flows from the main accommodation portion to the main outlet portion.

2. The hopper according to claim 1,
wherein the main space has a larger width than the sub-space.

3. The hopper according to claim 2,
wherein the sub-container includes a pair of sub-containers, and
wherein the pair of sub-containers are arranged with the main container positioned therebetween.

4. The hopper according to claim 2,
wherein a direction perpendicular to a width direction of the main space is defined as a length direction, and
wherein the sub-container is located at a side of the main container in the length direction.

5. The hopper according to claim 4,
wherein the main accommodation portion includes a pair of main sidewalls spaced apart from each other in the width direction with the main space positioned therebetween.

6. The hopper according to claim 2,
wherein the sub-space decreases in width in a direction away from the main space.

7. The hopper according to claim 2,
wherein the sub-outlet portion is connected to the main outlet portion.

8. The hopper according to claim 2,
wherein the sub-container further includes a sub-inlet portion at an opposite side of the sub-accommodation portion to feed the powder from the outside into the sub-space.

9. The hopper according to claim 8,
wherein the sub-inlet portion is connected to the main inlet portion.

10. The hopper according to claim 2, further comprising:
a connection container including a connection accommodation portion to provide a connection space connecting the main space to the sub-space,
wherein the connection space decreases in width from the main space to the sub-space.

11. The hopper according to claim 10,
wherein the sub-space has an even width in a direction away from the main space.

12. The hopper according to claim 10,
wherein the main space has an even width in a direction from the main space toward the sub-space.

13. The hopper according to claim 10,
wherein the connection container further includes a connection inlet portion at a side of the connection accommodation portion to discharge the powder in the connection space toward the press rollers.

14. The hopper according to claim 10,
wherein the connection container further includes a connection inlet portion at an opposite side of the connection accommodation portion to feed the powder from the outside into the connection space.

15. The hopper according to claim 1,
wherein the sub-space has an inclined inner wall toward the main space in the powder flow direction.

16. The hopper according to claim 15,
wherein the sub-accommodation portion includes:
a pair of sub-sidewalls spaced apart from each other with the main space positioned therebetween; and
an inclined plate between the pair of sub-sidewalls to define the main space from the outside,
wherein the inclined plate is inclined toward the main space in the powder flow direction.

17. An electrode sheet manufacturing apparatus comprising:
a pair of press rollers configured to compress a powder being fed; and
a hopper to hold the powder to be fed between the pair of press rollers,
wherein the hopper includes:
a main container including a main accommodation portion to provide a main space for holding the powder, a main outlet portion at a side of the main accommodation portion to discharge the powder in the main space toward the press rollers, and a main inlet portion at an opposite side of the main accommodation portion to feed the powder from outside into the main space; and
a sub-container including a sub-accommodation portion to provide a sub-space connected to the main space and a sub-inlet portion at a side of the sub-accommodation portion to discharge the powder in the sub-space toward the press rollers,
wherein the main space has a different cross-sectional area from the sub-space in a plane perpendicular to a powder flow direction in which the powder flows from the main accommodation portion to the main outlet portion.
